(19) Europäisches Patentamt / European Patent Office / Office européen des brevets

(11) **EP 3 919 538 A1**

(12) **EUROPEAN PATENT APPLICATION**

(43) Date of publication:
**08.12.2021 Bulletin 2021/49**

(51) Int Cl.:
***C08G 18/40*** *(2006.01)*   ***C08G 18/42*** *(2006.01)*
***C08G 18/48*** *(2006.01)*   ***C08G 18/76*** *(2006.01)*

(21) Application number: **20178216.6**

(22) Date of filing: **04.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

(54) **COMPOSITION FOR POLYURETHANE FOAM RAW MATERIAL**

(57)    Provided is a composition capable of forming a polyurethane foam having excellent adhesiveness while suppressing a decrease in hardness.

The composition is a composition for polyurethane foam raw material comprising an aliphatic polyester polyol having a molecular weight of 450 to 800 g/mol, in which the aliphatic polyester polyol is obtained by reaction of at least one acid selected from aliphatic dicarboxylic acids having 6 to 10 carbon atoms and at least one polyethylene glycol having 3 to 8 repeating units derived from ethylene glycol.

## Description

Technical Field

The present invention relates to a composition for polyurethane foam raw material and a polyurethane foam formed from the composition, and particularly to a raw material composition capable of forming a polyurethane foam having excellent adhesiveness while suppressing a decrease in hardness.

Background Art

Among resin-based foams, polyurethane foams (also referred to simply as urethane foams) have excellent thermal insulating performance and are therefore widely used as foam-based thermal insulating materials. Polyurethane foams are each usually produced by mixing a polyol and a polyisocyanate together with a catalyst, a blowing agent, a foam stabilizer and the like which are appropriately compounded as necessary, and foaming the mixture.

Polyurethane foams, especially rigid polyurethane foams, are required to sufficiently adhere to surfaces of objects such as metals, inorganic materials, and plastic resins without using an adhesive, when used as thermal insulating materials.

JP 2006-45435 A (Patent Literature 1) describes a method for producing a rigid polyurethane foam, containing reacting a polyol component containing a phthalic acid-based polyester polyol having a hydroxyl value of 150 to 550 mg KOH/g and an adipic acid-based polyester polyol having a hydroxyl value of 40 to 80 mg KOH/g, and an isocyanate component in the presence of a blowing agent containing a hydrofluorocarbon and a catalyst, thereby making it possible to provide a rigid polyurethane foam having excellent adhesiveness to an adherend such as a steel plate, concrete or a synthetic resin and having reduced voids, even when a phthalic acid-based polyester polyol is used as the polyol component and a hydrofluorocarbon is used as the blowing agent.

JP 2003-206330 A (Patent Literature 2) describes a rigid polyurethane foam obtained by reacting a polyhydroxy compound containing a polyester polyol and a polyisocyanate compound in the presence of a blowing agent containing a hydrofluorocarbon, in which the polyester polyol is composed of a polybasic acid containing adipic acid and a polyhydric alcohol, thereby making it possible to provide an HFC-foamed rigid polyurethane foam involving no problem of a decrease in self-adhesiveness due to an increase in brittleness, in particular, a highly flame-retardant polyurethane foam.

JP 2010-189455 A (Patent Literature 3) describes a method for producing a rigid polyurethane foam using at least a polyisocyanate, a polyol, a blowing agent, a catalyst and a surfactant as raw material components, in which a specific polyol, specifically, a polyester polyol obtained by an esterification reaction of an aliphatic polyvalent carboxylic acid having 4 to 8 carbon atoms and/or an aromatic polyvalent carboxylic acid having 8 to 10 carbon atoms with dipropylene glycol and tripropylene glycol, and having a hydroxyl value of 30 to 300 mg KOH/g is used in a specific weight ratio, and also describes that it is possible to provide a highly uniform system liquid (polyol premix liquid) for a rigid polyurethane foam having excellent dimensional stability and adhesiveness.

Citation List

Patent Literature

Patent Literature 1: JP 2006-45435 A

Patent Literature 2: JP 2003-206330 A

Patent Literature 3: JP 2010-189455 A

Summary of Invention

Technical Problem

When a polyurethane resin (specifically, a polyurethane foam), which is used as a thermal insulating material, and a face material are integrally molded, the adhesion between the polyurethane resin and the face material which constitute the resultant molded product is weak, so that peeling may occur. The adhesiveness between the polyurethane resin and the face material is a significant problem in terms of the quality of the molded product, and the improvement of the adhesiveness leads to obtainment of an excellent molded product.

The techniques for improving the adhesiveness of a polyurethane foam, as described in Patent Literatures 1 to 3, have been proposed, but such conventional techniques involve the problem of a decrease in hardness of the polyurethane foam. Since a rigid polyurethane foam is generally used as a thermal insulating material, the decrease in hardness can be said to be an issue to be minimized.

Therefore, an object of the present invention is to solve the above problems of prior art, and to provide a raw material composition which is capable of forming a polyurethane foam having excellent adhesiveness, while suppressing a decrease in hardness. Another object of the present invention is to provide a polyurethane foam formed from such a composition.

Solution to Problem

As a result of intensive studies to achieve the above object, the present inventors have found that an aliphatic polyester polyol having a molecular weight of 450 to 800 g/mol, obtained by reaction of at least one acid selected from aliphatic dicarboxylic acids having 6 to 10 carbon atoms and at least one polyethylene glycol having 3 to 8 repeating units derived from ethylene glycol, is used in a composition for polyurethane foam raw material, thereby making it possible to obtain a polyurethane foam having excellent adhesiveness while suppressing a decrease in hardness, and eventually accomplished the present invention.

Specifically, the composition of the present invention is a composition for polyurethane foam raw material comprising an aliphatic polyester polyol having a molecular weight of 450 to 800 g/mol, in which the aliphatic polyester polyol is obtained by reaction of at least one acid selected from aliphatic dicarboxylic acids having 6 to 10 carbon atoms and at least one polyethylene glycol having 3 to 8 repeating units derived from ethylene glycol.

In a preferred embodiment of the composition according to the present invention, the composition comprises a blowing agent.

In another preferred embodiment of the composition according to the present invention, the composition comprises water as the blowing agent.

In still another preferred embodiment of the composition according to the present invention, the amount of the aliphatic polyester polyol is 0.5 to 3.5 parts by mass based on 100 parts by mass of the composition for polyurethane foam raw material.

In still another preferred embodiment of the composition according to the present invention, the amount of the water is 0.2 to 10 parts by mass based on 100 parts by mass of the composition for polyurethane foam raw material.

In still another preferred embodiment of the composition according to the present invention, the composition comprises an aromatic polyester polyol.

In still another preferred embodiment of the composition according to the present invention, the amount of the aromatic polyester polyol is 5 to 30 parts by mass based on 100 parts by mass of the composition for polyurethane foam raw material.

In still another preferred embodiment of the composition according to the present invention, the composition has an isocyanate index of 90 to 150.

Further, the polyurethane foam of the present invention is a polyurethane foam formed by foaming the composition, in which the polyurethane foam has a density of 5 to 80 kg/m$^3$.

Advantageous Effects of Invention

The present invention can provide a raw material composition which can form a polyurethane foam excellent in adhesiveness while suppressing a decrease in hardness, and a polyurethane foam formed from the composition.

Description of Embodiments

Hereinafter, the composition for polyurethane foam raw material according to the present invention will be described in detail.

The composition of the present invention is a composition for polyurethane foam raw material comprising a polyol and a polyisocyanate.

The polyol used in the composition of the present invention is a compound having a plurality of hydroxyl groups, and is preferably a polymeric polyol. Specific examples of the polyol include polyether polyol, polyester polyol, polycarbonate polyol, polylactone polyol, polybutadiene polyol, polymer polyol, and Mannich polyol.

In the composition of the present invention, the amount of the polyol is appropriately adjusted according to the amount of the polyisocyanate, and is, for example, 30 to 50 parts by mass based on 100 parts by mass of the composition. These polyols may be used alone, or in combination of two or more.

A representative example of the polyether polyol is a polyoxyalkylene-based polyol which can be produced by a ring-opening addition reaction of an alkylene oxide using, as a starting raw material, a compound having two or more hydroxyl groups, primary amino groups, secondary amino groups or other active hydrogen-containing groups.

Examples of the starting raw material for the polyoxyalkylene-based polyol include polyhydric alcohols such as ethylene glycol, diethylene glycol, propylene glycol, dipropylene glycol, 1,4-butanediol, 1,6-hexanediol, neopentyl glycol, glycerol, trimethylolpropane, pentaerythritol, diglycerol, mannose, sucrose, fructose, dextrose and sorbitol; alkanolamines such as ethanolamine, diethanolamine, triethanolamine and methyldiethanolamine; polyvalent amines such as ethylenediamine, tolylenediamine, diethyltoluenediamine, 1,3-propanediamine, 1,6-hexanediamine, isophoronediamine, diethylenetriamine and triethylenepentamine; polyhydric phenols such as bisphenol A, bisphenol F, resorcinol and hydroquinone; and modified products thereof. These materials can be used alone, or two or more kinds thereof can be mixed for use.

When a polyoxyalkylene-based polyol is produced, the alkylene oxide to be subjected to a ring-opening addition reaction includes ethylene oxide, propylene oxide, 1,2-butylene oxide, 2,3-butylene oxide, and styrene oxide. These oxides can be used alone, or two or more kinds thereof can be mixed for use.

Examples of the polymer polyol include those in which polymer fine particles such as polyacrylonitrile fine particles or polystyrene fine particles are dispersed in polyoxyalkylene-based polyols.

The Mannich polyol can be produced by subjecting a phenol, an aldehyde, an alkanolamine or the like to a condensation reaction, and further performing a ring-opening addition reaction of an alkylene oxide such as ethylene oxide or propylene oxide as necessary.

Examples of suitable polyether-based polyols include polyoxyalkylene-based polyols, such as (di)ethylene glycol-based polyether polyol, (di)propylene glycol-based polyether polyol, obtained by subjecting ethylene oxide and/or propylene oxide to an addition reaction, (di)glycerin-based polyether polyol, trimethylolpropane-based polyether polyol, pentaerythritol-based polyether polyol, sucrose-based polyether polyol, dextrose-based polyether polyol, sorbitol-based polyether polyol, mono (di, tri)ethanolamine-based polyether polyol, ethylenediamine-based polyether polyol, tolylenediamine-based polyether polyol, and bisphenol A-based polyether polyol; polymer polyols in which polymer fine particles are dispersed in polyoxyalkylene-based polyols; and Mannich polyols. These polyols can be used alone, or two or more kinds thereof can be mixed for use.

The polyester polyol can be produced by adjusting the conditions for production of the polyester, and is for example a polyester having hydroxyl groups at least at both ends of the main chain, more specifically a linear polyester polyol, a slightly branched polyester polyol or the like. The polyester polyol can be prepared by a known method using an aliphatic, alicyclic or aromatic dicarboxylic acid, a diol, and optionally a polyvalent carboxylic acid and/or a trifunctional or higher functional polyol.

Examples of the polylactone polyol include polylactones having hydroxyl groups at least at both ends of the main chain, which are homopolymers or copolymers of lactones such as $\varepsilon$-caprolactone, $\beta$-butyrolactone, $\gamma$-butyrolactone, $\gamma$-valerolactone and $\delta$-valerolactone.

The polycarbonate polyol can be produced by adjusting the conditions for production of the polycarbonate, and examples thereof include polycarbonates having hydroxyl groups at least at both ends of the main chain. Examples of the polybutadiene polyol include polybutadienes having hydroxyl groups at least at both ends of the main chain.

The composition of the present invention contains, as a polyol, an aliphatic polyester polyol having a molecular weight of 450 to 800 g/mol, the aliphatic polyester polyol being obtained by reacting at least one kind of acid selected from aliphatic dicarboxylic acids having 6 to 10 carbon atoms, and at least one kind of polyethylene glycol having 3 to 8 repeating units derived from ethylene glycol. The present inventors have found that the use of an aliphatic polyester polyol obtained from the above specific raw materials and having a specific molecular weight makes it possible to provide a polyurethane foam having excellent adhesiveness while suppressing a decrease in hardness. In the present specification, an aliphatic polyester polyol obtained from the above specific raw materials and having a specific molecular weight is also referred to as (A) aliphatic polyester polyol.

In the present specification, the aliphatic polyester polyol is a polyester polyol in which the main component of the carboxylic acid used for synthesis of the aliphatic polyester polyol is an aliphatic carboxylic acid, and the proportion of the aliphatic carboxylic acid in the raw material carboxylic acid is preferably 50% by mass or more, more preferably 75% by mass or more, further preferably 100% by mass.

For the synthesis of the (A) aliphatic polyester polyol, an aliphatic dicarboxylic acid having 6 to 10 carbon atoms is used. The aliphatic dicarboxylic acid having 6 to 10 carbon atoms has a high effect of improving the adhesiveness. The aliphatic dicarboxylic acid has preferably 6 to 8 carbon atoms, particularly preferably 6 carbon atoms. Specific examples of the aliphatic dicarboxylic acid include adipic acid, pimelic acid, suberic acid, azelaic acid and sebacic acid. Among these acids, adipic acid is particularly suitable. In the synthesis of the (A) aliphatic polyester polyol, the proportion of the aliphatic dicarboxylic acid having 6 to 10 carbon atoms in the raw material carboxylic acid is preferably 50% by mass or more, more preferably 75% by mass or more, further preferably 100% by mass. These aliphatic dicarboxylic acid having 6 to 10 carbon atoms may be used alone, or in combination of two or more.

In the synthesis of the (A) aliphatic polyester polyol, a polyethylene glycol having 3 to 8 repeating units derived from ethylene glycol is used. The polyethylene glycol has an oxygen atom in the linear chain of the molecular structure, whereby the adhesiveness can be improved. From the viewpoint of ensuring good adhesiveness, the number of repeating units derived from ethylene glycol is 3 to 8, preferably 3 to 6, more preferably 3 to 4, particularly preferably 3. Specific examples include triethylene glycol, tetraethylene glycol, pentaethylene glycol, hexaethylene glycol, heptaethylene glycol, and octaethylene glycol. Among these glycols, triethylene glycol is particularly suitable. In the synthesis of the (A) aliphatic polyester polyol, the proportion of the polyethylene glycol having 3 to 8 repeating units in the raw material polyol is preferably 50% by mass or more, more preferably 75% by mass or more, further preferably 100% by mass. These polyethylene glycols having 3 to 8 repeating units may be used alone, or in combination of two or more.

The (A) aliphatic polyester polyol has a molecular weight of 450 to 800 g/mol. The (A) aliphatic polyester polyol has the above specific molecular weight, and thus has good moldability and can improve the adhesiveness while suppressing a decrease in hardness. In order to impart adhesiveness to a polyurethane foam suitable as a thermal insulating material, the aliphatic polyester polyol desirably has a high molecular weight. For example, when polypropylene glycol is used as the raw material polyol, an aliphatic polyester polyol having a high molecular weight is suitable in order to ensure adhesiveness, but, in this case, the resulting polyurethane foam has a reduced hardness and thus cannot be said to be suitable as a thermal insulating material. On the other hand, the (A) aliphatic polyester polyol uses a polyethylene glycol having 3 to 8 repeating units as the raw material polyol, and thus can sufficiently improve the adhesiveness even if having a molecular weight of 450 to 800 g/mol. The (A) aliphatic polyester polyol has a molecular weight of preferably 455 to 650 g/mol, further preferably 460 to 560 g/mol.

In the present specification, the molecular weight of the polyol is a number average molecular weight in terms of polystyrene as measured by gel permeation chromatography.

The (A) aliphatic polyester polyol has a hydroxyl value of preferably 170 to 250 mg KOH/g, further preferably 200 to 245 mg KOH/g.

In the present specification, the hydroxyl value is the number of mg of potassium hydroxide required to neutralize free hydroxyl groups in 1 g of a sample after completely acetylating the hydroxyl groups with acetic anhydride (see JIS K 1557 2007).

The (A) aliphatic polyester polyol has a functional group number (fn) of preferably 2 to 3, particularly preferably 2.

In the present specification, the functional group number (fn) per polyol molecule is determined from the hydroxyl value (OHV) and number average molecular weight (Mn) of the polyol based on the following formula:

$$fn = Mn(g/mol) \times OHV(mg \ KOH/g)/56100.$$

In the composition of the present invention, the amount of the (A) aliphatic polyester polyol is preferably 0.5 to 3.5 parts by mass, further preferably 1.1 to 3.3 parts by mass, based on 100 parts by mass of the composition. The (A) aliphatic polyester polyol may be used alone or in combination of two or more.

The composition of the present invention preferably contains an aromatic polyester polyol as the polyol. By using an aromatic polyester polyol, a polyurethane foam suitable as a thermal insulating material can be obtained.

In the present specification, the aliphatic polyester polyol is a polyester polyol in which the main component of the carboxylic acid used for synthesis of the aromatic polyester polyol is an aromatic carboxylic acid, and the proportion of the aromatic carboxylic acid in the raw material carboxylic acid is preferably 50% by mass or more, more preferably 70% by mass or more, further preferably 100% by mass. Specific examples of the aromatic carboxylic acid include phthalic acid, terephthalic acid and isophthalic acid. These aromatic carboxylic acids may be used alone, or in combination of two or more.

The aromatic polyester polyol has a hydroxyl value of preferably 150 to 500 mg KOH/g, further preferably 200 to 450 mg KOH/g. The aromatic polyester polyol has a molecular weight of preferably 200 to 1000 g/mol, further preferably 250 to 700 g/mol. The aromatic polyester polyol has preferably a functional group number (fn) of 2 to 6, further preferably 2 to 4.

In the composition of the present invention, the amount of the aromatic polyester polyol is preferably 5 to 30 parts by mass, further preferably 10 to 25 parts by mass, based on 100 parts by mass of the composition. The aromatic polyester polyol may be used alone or in combination of two or more.

The polyisocyanate used in the composition of the present invention is a compound having a plurality of isocyanate groups, and includes, for example, aliphatic, alicyclic, aromatic or araliphatic polyisocyanates, and also includes modified products of these polyisocyanates. Examples of the modified products of these polyisocyanates include polyisocyanates having structures such as uretdione, isocyanurate, urethane, urea, allophanate, biuret, carbodiimide, iminooxadiazinedione, oxadiazinetrione, and oxazolidone. Further, as the polyisocyanate, an isocyanate group-containing prepolymer obtained by reacting a polyol with a polyisocyanate may be used. These polyisocyanates may be used alone, or in combination of two or more.

Among these polyisocyanates, examples of the aromatic polyisocyanate include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, and polymethylene polyphenyl polyisocyanate. Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate. Examples of the aliphatic polyisocyanate include methylene diisocyanate, ethylene diisocyanate, propylene diisocyanate, tetramethylene diisocyanate, and hexamethylene diisocyanate.

The polyisocyanate has an isocyanate group content of preferably 20 to 40% by mass, further preferably 25 to 35% by mass. In the present specification, the isocyanate group content is determined in accordance with JIS K 1603.

In the composition of the present invention, the amount of the polyisocyanate can be indicated by, for example, an isocyanate index. In the composition of the present invention, from the viewpoint of thermal insulation of the polyurethane foam, the isocyanate index is preferably set low. Specifically, the isocyanate index is preferably 90 to 150, further preferably 105 to 130.

In the present specification, the isocyanate index is a value obtained by multiplying the ratio of the isocyanate groups in the polyisocyanate to the total of active hydrogens that react with the isocyanate groups in the polyol, blowing agent and the like by 100.

The composition of the present invention contains a polyol component and a polyisocyanate component. The polyol component contains a polyol, and usually contains a blowing agent, a foam stabilizer, a flame retardant, a catalyst, and the like. The isocyanate component is composed of a polyisocyanate, but may contain additives such as a blowing agent and a flame retardant. The composition of the present invention is often composed of a stock solution containing a pair of a polyol component and a polyisocyanate component.

Catalysts that can be used in the composition of the present invention include a catalyst that promotes a reaction between water and an isocyanate (foaming catalyst), a catalyst that promotes a reaction between a polyol and an isocyanate (resinification catalyst), and a catalyst that promotes a trimerization reaction of an isocyanate (i.e., formation of an isocyanurate ring) (trimerization catalyst).

Examples of the foaming catalyst include dimorpholine-2,2-diethyl ether, N,N,N',N'',N''-pentamethyldiethylenetriamine, bis(dimethylaminoethyl)ether, and 2-(2-dimethylaminoethoxy)ethanol.

Examples of the resinification catalyst include amine catalysts such as triethylenediamine, N,N-dimethylcyclohexylamine, N,N,N',N'-tetramethylethylenediamine, N,N,N',N'',N''',N'''-hexamethyltriethylenetetramine, N-dimethylaminoethyl-N'-methylpiperazine, N,N,N',N'-tetramethylhexamethylenediamine, 1,2-dimethylimidazole, N,N-dimethylaminopropylamine, and bis(dimethylaminopropyl) amine; alkanolamine catalysts such as N,N-dimethylaminoethanol, N,N,N'-trimethylaminoethylethanolamine, N,N,N'-trimethyl-N'-hydroxyethylbisaminoethyl ether, N-(3-dimethylaminopropyl)-N,N-diisopropanolamine, N-(2-hydroxyethyl)-N'-methylpiperazine, N,N-dimethylaminohexanol, and 5-dimethylamino-3-methyl-1-pentanol; and metal catalysts such as tin(II) octylate, dibutyltin(IV) dilaurate, lead octylate, bismuth carboxylate, and zirconium complexes.

Examples of the trimerization catalyst include aromatic compounds such as 2,4,6-tris(dialkylaminoalkyl)hexahydro-S-triazine, 1,3,5-tris(N,N-dimethylaminopropyl)hexahydro-S-triazine, 2,4,6-tris(dimethylaminomethyl)phenol, 2,4-bis(dimethylaminomethyl)phenol, and 1-isobutyl-2-methylimidazole; alkali metal salts of carboxylic acids such as potassium acetate, potassium 2-ethylhexanoate, and potassium octylate; quaternary ammonium salts of carboxylic acids, or other onium salts.

In the composition of the present invention, the amount of the catalyst is for example 0.1 to 5 parts by mass, preferably 0.2 to 1.0 part by mass, based on 100 parts by mass of the composition. These catalysts may be used alone, or in combination of two or more.

Blowing agents that can be used in the composition of the present invention are generally classified into physical blowing agents and chemical blowing agents. These blowing agents may be used alone, or in combination of two or more. Further, a physical blowing agent and a chemical blowing agent may be used in combination. In the composition of the present invention, the content of the blowing agent is preferably 0.5 to 15 parts by mass, further preferably 1.0 to 10 parts by mass, based on 100 parts by mass of the composition.

Specific examples of the physical blowing agent include fluorocarbons such as hydrochlorofluorocarbon (HCFC) and hydrofluorocarbon (HFC); hydrofluoroolefins (HFOs); hydrocarbons such as heptane, hexane, pentane and cyclopentane; and carbon dioxide. On the other hand, examples of the chemical blowing agent include water and carboxylic acids such as formic acid and acetic acid.

The composition of the present invention preferably contains a hydrofluoroolefin as the blowing agent. When a hydrofluoroolefin is used, the adhesiveness of the polyurethane foam can be improved. The hydrofluoroolefin (HFO) is a blowing agent that is suitably used as a physical blowing agent that is not a fluorocarbon. HFO is an olefin compound containing a fluorine atom, and also includes those further containing a halogen atom (for example, a chlorine atom) other than fluorine. Those further containing a chlorine atom are also referred to as hydrochlorofluoroolefins (HCFOs).

The hydrofluoroolefin preferably has 2 to 5 carbon atoms, and preferably has 3 to 7 fluorine atoms. The molecular weight of HFO is preferably from 100 to 200. Specific examples of HFO include 1,2,3,3,3-pentafluoropropene, 1,3,3,3-tetrafluoropropene, 2,3,3,3-tetrafluoropropene, 1,2,3,3-tetrafluoropropene, 3,3,3-trifluoropropene, 1,1,1,4,4,4-hexafluorobutene, 1-chloro-3,3,3-trifluoropropene, 2-chloro-3,3,3-trifluoropropene, 3,3-dichloro-3-fluoropropene, 2-chloro-1,1,1,4,4,4-hexafluorobutene, and 2-chloro-1,1,1,3,4,4,4-heptafluorobutene. HFO may be either a cis-isomer or a trans-isomer. These HFOs may be used alone, or in combination of two or more.

In the composition of the present invention, the amount of the hydrofluoroolefin is for example 0.5 to 15 parts by mass, preferably 2 to 12% by mass, based on 100 parts by mass of the composition.

The composition of the present invention preferably contains water as the blowing agent, from the viewpoint of improving the appearance and strength of the foam. In the composition of the present invention, the amount of water is for example 0.2 to 10 parts by mass, preferably 0.5 to 3 parts by mass, based on 100 parts by mass of the composition.

In the composition of the present invention, a surfactant is suitably used as the foam stabilizer. Surfactants include ionic surfactants such as anionic, cationic, and amphoteric surfactants and nonionic surfactants, and are preferably nonionic surfactants. Further, as specific examples, a silicone-based surfactant and a fluorine-based surfactant are preferably exemplified. In the composition of the present invention, the amount of the foam stabilizer is preferably 1 to 5 parts by mass based on 100 parts by mass of the composition. These foam stabilizers may be used alone, or in combination of two or more.

In the composition of the present invention, a phosphorus-based flame retardant is suitably used as the flame retardant. Specific examples of the flame retardant include tricresyl phosphate (TCP), triethyl phosphate (TEP), tris($\beta$-chloroethyl) phosphate (TCEP), and tris($\beta$-chloropropyl) phosphate (TCPP). Further, a solid (powder) flame retardant such as ammonium polyphosphate or red phosphorus is also used as needed. In the composition of the present invention, the amount of the flame retardant is preferably 3 to 15 parts by mass based on 100 parts by mass of the composition. These flame retardants may be used alone, or in combination of two or more.

In the composition of the present invention, as other components, a coloring agent, a filler, an antioxidant, an ultraviolet absorber, a heat stabilizer, a light stabilizer, a plasticizer, a fungicide, an antibacterial agent, a crosslinking agent, a solvent, a viscosity reducing agent, a depressurizing agent, a separation preventing agent and the like may be appropriately compounded as necessary. Commercially available products can be suitably used as these components.

The composition of the present invention can be prepared by mixing various components appropriately selected as necessary. For example, the composition of the present invention can be prepared by mixing a polyol component containing a polyol and a catalyst with a polyisocyanate component composed of a polyisocyanate.

Next, the polyurethane foam of the present invention will be described in detail. The polyurethane foam of the present invention is obtained by foaming the above-described composition for polyurethane foam raw material according to the present invention. The composition of the present invention contains a polyol and a polyisocyanate, and thus the reaction proceeds upon mixing of these components, so that a polyurethane foam can be formed. The temperature at the time of forming the polyurethane foam is preferably 20 to 80°C.

The polyurethane foam of the present invention has excellent adhesiveness to surfaces of objects such as a metal, an inorganic material, and a plastic resin.

The method for foaming the polyurethane foam is not particularly limited, and known foaming means such as hand mixing foaming, simple foaming, injection, floss injection, and spraying can be used. The method for molding the polyurethane foam is also not particularly limited, and known molding means such as mold molding, slab molding, laminate molding, and foam-in-place molding can be used.

The polyurethane foam of the present invention can be used for various purposes such as ships, vehicles, plants, thermal insulation equipment, architecture, civil engineering, furniture, and interiors. It can be suitably used as a thermal insulating material, specifically, a thermal insulating member for thermal insulation equipment such as a refrigerating or freezing warehouse.

In addition, the polyurethane foam of the present invention is preferably a polyurethane foam with a face material, further preferably a polyurethane foam with a metal face material, because of its excellent adhesiveness. In the present specification, the polyurethane foam with a face material is a plate-like composite material in which a face material such as a foil or a plate is provided on one or both side(s) of the polyurethane foam, and can be used as a thermal insulating material for various purposes.

Preferable examples of an adherend for the face material include metals and other inorganic materials, particularly including aluminum and its alloys, stainless steel and its alloys, iron and its alloys, and copper and its alloys. Further, on the surface of the adherend, a coating may be applied to the surface to which the composition of the present invention is to be attached, if desired. Examples of the coating include an organic polymer coating agent such as a polyester resin. The thickness of the adherend is preferably 0.2 to 0.6 mm.

The polyurethane foam of the present invention has a density of for example 5 to 80 kg/m$^3$, preferably 25 to 70 kg/m$^3$, further preferably 40 to 65 kg/m$^3$. In the present specification, the density of the polyurethane foam is measured in accordance with JIS K 7222:2005.

The polyurethane foam of the present invention preferably has a hardness of 70 or more as measured by an Asker rubber hardness meter CS. In the present specification, the hardness is measured in accordance with JIS K 6253.

Although the polyurethane foam of the present invention varies depending on the types of the blowing agent and the adherend. For example, the adhesive strength is preferably 150 N/cm$^2$ or more. The upper limit of the adhesive strength is not particularly limited, and is, for example, 400 N/cm$^2$ or less. In the present specification, the adhesive strength is measured according to JIS K 6850:1999.

When the center temperature for the measurement is 23°C, the polyurethane foam of the present invention has a thermal conductivity of preferably 0.0185 to 0.0280 W/m·K, further preferably 0.0190 to 0.0260 W/m·K. In the present specification, the thermal conductivity is measured according to JIS A 1412-2:1999.

The polyurethane foam of the present invention can be suitably applied to various applications requiring thermal insulation. In particular, the polyurethane foam of the present invention can be advantageously utilized as a building material or thermal insulating material for various facilities such as apartment houses such as condominiums, detached houses, schools and commercial buildings, freezing warehouses, bathtubs, factory piping, automobiles and railway vehicles.

Further, the polyurethane foam of the present invention can also be used at the time of manufacturing in-site thermal insulating materials and anti-condensation materials by a spraying method, and building materials such as panels and boards on a factory line. Therefore, according to one embodiment of the present invention, the polyurethane foam is a spray-applied rigid urethane foam for building thermal insulation as specified in JIS A 9526:2017.

## Examples

Hereinafter, the present invention will be described in more detail with reference to Examples, but the present invention is not limited to the following Examples.

1. Outline

A polyol component containing a polyol and a blowing agent and a polyisocyanate component are mixed with a high-pressure foaming machine to prepare a composition for a foam raw material, and the composition for a foam raw material is injected into a mold in which a face material for measuring the adhesiveness is arranged, thereby forming a polyurethane foam. The hardness and adhesiveness of the obtained molded article are measured and evaluated.

2. Device and equipment

High-pressure foaming machine (HK-135, manufactured by Hennecke)
Chopsticks
Stopwatch (with lap function)
Mold (made of aluminum, inner dimensions: length: 400 mm, width: 300 mm, and thickness: 50 mm)

3. Material

1) Polyol

Polyol A: polyether polyol [SBU polyol 0517: manufactured by Sumika Covestro Urethane Co.,Ltd., functional group number: 4.1, hydroxyl value: 480 mg KOH/g, molecular weight: 479 g/mol]

Polyol B: polyether polyol [SBU Polyol H422: manufactured by Sumika Covestro Urethane Co.,Ltd., functional group number: 4, hydroxyl value: 410 mg KOH/g, molecular weight: 547 g/mol]

Polyol C: aromatic polyester polyol [MAXIMOL RLK-087: manufactured by Kawasaki Kasei Chemicals Ltd., functional group number: 2, hydroxyl value: 200 mg KOH/g, molecular weight: 561 g/mol]

Polyol D: aliphatic polyester polyol [polyester polyol obtained by reaction between adipic acid and triethylene glycol, functional group number: 2, hydroxyl value: 304 mg KOH/g, molecular weight: 369 g/mol]

Polyol E: aliphatic polyester polyol [polyester polyol obtained by reaction between adipic acid and triethylene glycol, functional group number: 2, hydroxyl value: 273 mg KOH/g, molecular weight 411 g/mol]

Polyol F: Aliphatic polyester polyol [polyester polyol obtained by reaction between adipic acid and triethylene glycol, functional group number: 2, hydroxyl value: 232 mg KOH/g, molecular weight 475 g/mol]

Polyol G: aliphatic polyester polyol [polyester polyol obtained by reaction between adipic acid and triethylene glycol, functional group number: 2, hydroxyl value: 206 mg KOH/g, molecular weight 545 g/mol]

Polyol H: aliphatic polyester polyol [polyester polyol obtained by reaction between adipic acid and triethylene glycol, functional group number: 2, hydroxyl value: 175 mg KOH/g, molecular weight: 611 g/mol]

Polyol I: aliphatic polyester polyol [polyester polyol obtained by reaction between adipic acid and triethylene glycol, functional group number: 2, hydroxyl value: 144 mg KOH/g, molecular weight 779 g/mol]

Polyol J: aliphatic polyester polyol [polyester polyol obtained by reaction between adipic acid and triethylene glycol, functional group number: 2, hydroxyl value: 115 mg KOH/g, molecular weight 976 g/mol]

Polyol K: aliphatic polyester polyol [polyester polyol obtained by reaction between adipic acid and diethylene glycol, functional group number: 2, hydroxyl value: 205 mg KOH/g, molecular weight 547 g/mol]

Polyol L: aliphatic polyester polyol [polyester polyol obtained by reaction between adipic acid and diethylene glycol, functional group number: 2, hydroxyl value: 145 mg KOH/g, molecular weight 774 g/mol]

2) Polyisocyanate

Polyisocyanate A: polymeric MDI [Sumidur 44V20 L: manufactured by Sumika Covestro Urethane Co.,Ltd., isocyanate group content: 31.5% by mass]

3) Blowing agent

Blowing agent A: water

Blowing agent B: cyclopentane (molecular weight: 70)

Blowing agent C: HCFO-1233zd (molecular weight: 130)

Blowing agent D: HFO-1336mzz (Z) (molecular weight: 164)

4) Other additives

Catalyst A: dimorpholine-2,2-diethyl ether

Catalyst B: 70% by mass of 1,2-dimethylimidazole + 30% by mass of diethylene glycol

Foam stabilizer: silicon-based nonionic surfactant [TEGOSTAB B8460: manufactured by Evonik Japan Co., Ltd.]
Flame retardant: tris(2-chloroisopropyl)phosphate

5) Face material

• Aluminum A5052 with polyester resin coating

• Stainless steel SUS304 without coating

<Production and evaluation of polyurethane foam>

Polyol components having the formulations indicated in Tables 1 to 3 are prepared. Next, using a high-pressure foaming machine HK-135 manufactured by Hennecke, the respective polyol components and polyisocyanate component adjusted to 18 to 20°C are mixed at the mixing mass ratios indicated in Tables 1 to 3 to prepare compositions for a foam raw material. Injection molding is performed at a discharge pressure of 12 MPa.

The mold is pre-heated to 40°C, in which a face material for measuring the adhesiveness is arranged at the center of the lower surface. Each of the compositions for a foam raw material is injected into one point at the center.

The weight is adjusted to 320 to 340 g so that the urethane foam has a certain density.

Thirty minutes after the injection of the composition for a foam raw material, a polyurethane foam is taken out of the mold.

After removal of the polyurethane foam with the face material, the foam is placed on a flat surface in a state where the foam faces up. The hardness of the foam upper surface is measured using a CS hardness meter manufactured by Kobunshi Keiki Co., Ltd. in an atmosphere at 17 to 23°C in a period between after 1 minute and after 3 minutes (average of five-point measurements near the center of the upper part; the hardness meter is pressed against the foam upper surface for 5 seconds to read a stable value). Tables 1 to 3 indicate the obtained results.

Then, after a lapse of 12 hours or more, the adhesiveness is measured with a CPU gauge 9550 manufactured by Aikoh Engineering Co., Ltd. to which a hook-shaped attachment is attached (JIS K 6850:1999).

The hook of the CPU gauge is attached to the hole previously formed at an end of the face material for measuring the adhesiveness, and manually pulled perpendicularly to the face material at a constant speed. The measured value is defined as adhesive strength (average of two-point measurements at the center of the lower surface). Tables 1 to 3 indicate average values of five measurements.

<Method of measuring gel time>

In order to confirm the reactivity of the composition for a foam raw material, an amount that does not overflow is poured into an upper surface-open wooden box which is 300 mm long, 200 mm wide, and 200 mm high, at a predetermined temperature and pressure. The time required for the injected composition for a foam raw material to become stringy when it is touched with split chopsticks is measured as gel time (seconds). Raw material temperature: 18 to 20°C, wooden box temperature: 15 to 25°C, injection pressure: 12 MPa. Tables 1 to 3 indicate the obtained results.

<Method of measuring free form density>

In order to confirm the reactivity of the composition for a foam raw material, an amount that does not overflow is poured into an upper surface-open wooden box which is 300 mm long, 200 mm wide, and 200 mm high, at a predetermined temperature and pressure. The density is measured from the weight and volume of a foam cube obtained by cutting the foam at the center two hours after pouring, the cube having sides of about 50 mm. Raw material temperature: 18 to 20°C, wooden box temperature: 15 to 25°C, injection pressure: 12 MPa. Tables 1 to 3 indicate the obtained results.

[Table 1]

| | | | Comparative Example 1 | Example 1 | Example 2 | Example 3 | Comparative Example 2 | Example 4 | Example 5 | Example 6 |
|---|---|---|---|---|---|---|---|---|---|---|
| Polyol component | Polyol A | Parts by mass | 45 | 43 | 42 | 41 | 45 | 43 | 42 | 41 |
| | Polyol B | | 15 | 14 | 13 | 13 | 15 | 14 | 13 | 13 |
| | Polyol C | | 40 | 38 | 37 | 36 | 40 | 38 | 37 | 36 |
| | Polyol D | | | | | | | | | |
| | Polyol E | | | | | | | | | |
| | Polyol F | | | | | | | | | |
| | Polyol G | | | 5 | 8 | 10 | | 5 | 8 | 10 |
| | Polyol H | | | | | | | | | |
| | Polyol I | | | | | | | | | |
| | Polyol J | | | | | | | | | |
| | Polyol K | | | | | | | | | |
| | Polyol L | | | | | | | | | |
| | Flame retardant | | 15 | 15 | 15 | 15 | 15 | 15 | 15 | 15 |
| | Foam stabilizer | | 2 | 2 | 2 | 2 | 2 | 2 | 2 | 2 |
| | Catalyst A | | 1.5 | 1.5 | 1.5 | 1.5 | 1.5 | 1.5 | 1.5 | 1.5 |
| | Catalyst B | | 0.5 | 0.5 | 0.5 | 0.5 | 0.7 | 0.7 | 0.7 | 0.7 |
| | Blowing agent A | | 3.2 | 3.2 | 3.2 | 3.2 | 1.5 | 1.5 | 1.5 | 1.5 |
| | Blowing agent B | | | | | | 7.5 | 7.5 | 7.5 | 7.5 |
| | Blowing agent C | | | | | | | | | |
| | Blowing agent D | | | | | | | | | |
| Polyisocyanate component | Polyisocyanate A | | 146 | 144 | 142 | 142 | 118 | 116 | 115 | 114 |
| Mixing mass ratio (polyol component/polyisocyanate component) | | | 100/119 | 100/118 | 100/117 | 100/116 | 100/92 | 100/90 | 100/90 | 100/89 |
| Temperature of composition for foam raw material (°C) | | | 20 | 20 | 20 | 20 | 20 | 20 | 20 | 20 |

(continued)

| | | Comparative Example 1 | Example 1 | Example 2 | Example 3 | Comparative Example 2 | Example 4 | Example 5 | Example 6 |
|---|---|---|---|---|---|---|---|---|---|
| Reactvity | Gel time (sec.) | 100 to 120 | 100 to 120 | 100 to 120 | 100 to 120 | 100 to 120 | 100 to 120 | 100 to 120 | 100 to 120 |
| | Free foam density (kg/m$^3$) | 39 to 41 | 39 to 41 | 39 to 41 | 39 to 41 | 39 to 41 | 39 to 41 | 39 to 41 | 39 to 41 |
| Adhesiveness | Face material: aluminum A5052 with polyester resin coating | 74 | 89 | 97 | 102 | 129 | 152 | 160 | 166 |
| | according to JIS K 6850, n = 5 average, unit: N/cm$^2$ | | | | | | | | |
| | Face material: stainless steel SUS304 without coating | 96 | 105 | 109 | 112 | 157 | 172 | 176 | 180 |
| | according to JIS K 6850, n = 5 average, unit N/cm$^2$ | | | | | | | | |
| Hardness | CS hardness meter (hardness 30 min. after demolding) | 85 | 84 | 81 | 69 | 85 | 83 | 80 | 67 |
| | according to JIS K 6253 | | | | | | | | |

Examples 1 to 3 and Comparative Example 1 are systems using water as the blowing agent. Examples 1 to 3 were superior, in adhesiveness, to Comparative Example 1 in which polyol G was not blended.

Examples 4 to 6 and Comparative Example 2 are systems using water and cyclopentane as the blowing agents. Examples 4 to 6 were superior, in adhesiveness, to Comparative Example 2 in which polyol G was not blended.

[Table 2]

| Polyol component | | Parts by mass | Comparative Example 3 | Example 7 | Example 8 | Example 9 | Comparative Example | Example 10 | Example 11 | Example 12 |
|---|---|---|---|---|---|---|---|---|---|---|
| Polyol component | Polyol A | Parts by mass | 45 | 43 | 42 | 41 | 45 | 43 | 42 | 41 |
| | Polyol B | | 15 | 14 | 13 | 13 | 15 | 14 | 13 | 13 |
| | Polyol C | | 40 | 38 | 37 | 36 | 40 | 38 | 37 | 36 |
| | Polyol D | | | | | | | | | |
| | Polyol E | | | | | | | | | |
| | Polyol F | | | | | | | | | |
| | Polyol G | | | 5 | 8 | 10 | | 5 | 8 | 10 |
| | Polyol H | | | | | | | | | |
| | Polyol I | | | | | | | | | |
| | Polyol J | | | | | | | | | |
| | Polyol K | | | | | | | | | |
| | Polyol L | | | | | | | | | |
| | Flame retardant | | 15 | 15 | 15 | 15 | 15 | 15 | 15 | 15 |
| | Foam stabilizer | | 2 | 2 | 2 | 2 | 2 | 2 | 2 | 2 |
| | Catalyst A | | 1.5 | 1.5 | 1.5 | 1.5 | 1.5 | 1.5 | 1.5 | 1.5 |
| | Catalyst B | | 0.7 | 0.7 | 0.7 | 0.7 | 0.7 | 0.7 | 0.7 | 0.7 |
| | Blowing agent A | | 1.5 | 1.5 | 1.5 | 1.5 | 1.5 | 1.5 | 1.5 | 1.5 |
| | Blowing agent B | | | | | | | | | |
| | Blowing agent C | | | | | | 15 | 15 | 15 | 15 |
| | Blowing agent D | | 19 | 19 | 19 | 19 | | | | |
| Polyisocyanate component | Polyisocyanate A | | 118 | 116 | 115 | 121 | 118 | 116 | 115 | 114 |
| Mixing mass ratio (polyol component/polyisocyanate component) | | | 100/84 | 100/83 | 100/82 | 100/79 | 100/87 | 100/85 | 100/85 | 100/84 |
| Temperature of composition for foam raw material (°C) | | | 20 | 20 | 20 | 20 | 20 | 20 | 20 | 20 |

EP 3 919 538 A1

14

(continued)

| | | Comparative Example 3 | Example 7 | Example 8 | Example 9 | Comparative Example | Example 10 | Example 11 | Example 12 |
|---|---|---|---|---|---|---|---|---|---|
| Reactvity | Gel time (sec.) | 100 to 120 | 100 to 120 | 100 to 120 | 100 to 120 | 100 to 120 | 100 to 120 | 100 to 120 | 100 to 120 |
| | Free foam density (kg/m$^3$) | 39 to 41 | 39 to 41 | 39 to 41 | 39 to 41 | 39 to 41 | 39 to 41 | 39 to 41 | 39 to 41 |
| Adhesiveness | Face material: aluminum A5052 with polyester resin coating | 132 | 154 | 167 | 189 | 166 | 187 | 201 | 213 |
| | according to JIS K 6850, n = 5 average, unit: N/cm$^2$ | | | | | | | | |
| | Face stainless steel SUS304 coating | 179 | 204 | 211 | 217 | 221 | 255 | 270 | 285 |
| | according to JIS K 6850, n = 5 average, unit N/cm$^2$ | | | | | | | | |
| Hardness | CS hardness meter (hardness 30 min. after demolding) | 83 | 82 | 78 | 65 | 82 | 80 | 77 | 63 |
| | according to JIS K 6253 | | | | | | | | |

Examples 7 to 9 and Comparative Example 3 are systems using water and HFO-1336mzz (Z) as the blowing agents. Examples 7 to 9 were superior, in adhesiveness, to Comparative Example 3 in which polyol G was not blended.

Examples 10 to 12 and Comparative Example 4 are systems using water and HCFO-1233zd as the blowing agents. Examples 10 to 12 were superior, in adhesiveness, to Comparative Example 4 in which polyol G was not blended.

[Table 3]

| | | | Comparative Example 4 | Comparative Example 5 | Comparative Example 6 | Example 13 | Example 10 | Example 14 | Example 15 | Comparative Example 7 | Comparative Example 8 | Comparative Example 9 |
|---|---|---|---|---|---|---|---|---|---|---|---|---|
| Polyol component | Polyol A | Parts by mass | 45 | 42 | 42 | 42 | 43 | 42 | 42 | 42 | 42 | 42 |
| | Polyol B | | 15 | 13 | 13 | 13 | 14 | 13 | 13 | 13 | 13 | 13 |
| | Polyol C | | 40 | 37 | 37 | 37 | 38 | 37 | 37 | 37 | 37 | 37 |
| | Polyol D | | | 5 | | | | | | | | |
| | Polyol E | | | | 5 | | | | | | | |
| | Polyol F | | | | | 5 | | | | | | |
| | Polyol G | | | | | | 5 | | | | | |
| | Polyol H | | | | | | | 5 | | | | |
| | Polyol I | | | | | | | | 5 | | | |
| | Polyol J | | | | | | | | | 5 | | |
| | Polyol K | | | | | | | | | | 5 | |
| | Polyol L | | | | | | | | | | | 5 |
| | Flame retardant | | 15 | 15 | 15 | 15 | 15 | 15 | 15 | 15 | 15 | 15 |
| | Foam stabilizer | | 2 | 2 | 2 | 2 | 2 | 2 | 2 | 2 | 2 | 2 |
| | Catalyst A | | 1.5 | 1.5 | 1.5 | 1.5 | 1.5 | 1.5 | 1.5 | 1.5 | 1.5 | 1.5 |
| | Catalyst B | | 0.7 | 0.7 | 0.7 | 0.7 | 0.7 | 0.7 | 0.7 | 0.7 | 0.7 | 0.7 |
| | Blowing agent A | | 1.5 | 1.5 | 1.5 | 1.5 | 1.5 | 1.5 | 1.5 | 1.5 | 1.5 | 1.5 |
| | Blowing agent B | | | | | | | | | | | |
| | Blowing agent C | | 15 | 15 | 15 | 15 | 15 | 15 | 15 | 15 | 15 | 15 |
| | Blowing agent D | | | | | | | | | | | |
| Polyisocyanate component | Polyisocyanate A | | 118 | 117 | 117 | 116 | 116 | 116 | 115 | 115 | 116 | 115 |
| Mixing mass ratio (polyol component/ polyisocyanate component) | | | 100/87 | 100/86 | 100/86 | 100/86 | 100/85 | 100/85 | 100/85 | 100/85 | 100/85 | 100/85 |

(continued)

| | | Comparative Example 4 | Comparative Example 5 | Comparative Example 6 | Example 13 | Example 10 | Example 14 | Example 15 | Comparative Example 7 | Comparative Example 8 | Comparative Example 9 |
|---|---|---|---|---|---|---|---|---|---|---|---|
| Temperature of composition for foam raw material (°C) | | 20 | 20 | 20 | 20 | 20 | 20 | 20 | 20 | 20 | 20 |
| Reactvity | Gel time (sec.) | 100 to 120 | 100 to 120 | 100 to 120 | 100 to 120 | 100 to 120 | 100 to 120 | 100 to 120 | 100 to 120 | 100 to 120 | 100 to 120 |
| | Free foam density (kg/m$^3$) | 39 to 41 | 39 to 41 | 39 to 41 | 39 to 41 | 39 to 41 | 39 to 41 | 39 to 41 | 39 to 41 | 39 to 41 | 39 to 41 |
| Adhesiveness | Face material: aluminum A5052 with polyester resin coating according to JIS K 6850, n = 5 average, unit: N/cm$^2$ | 166 | 152 | 167 | 180 | 187 | 213 | 221 | 232 | 150 | 175 |
| | Face material: stainless steel SUS304 without coating according to JIS K 6850, n = 5 average, unit N/cm$^2$ | 221 | 198 | 223 | 237 | 255 | 281 | 288 | 305 | 196 | 224 |
| Hardness | CS hardness meter (hardness 30 min. after demolding) according to JIS K 6253 | 82 | 81 | 81 | 80 | 80 | 80 | 75 | 69 | 84 | 77 |

**EP 3 919 538 A1**

Examples 10 and 13 to 15 and Comparative Examples 5 to 9 are systems using water and HCFO-1233zd as the blowing agents, but are different in the blended polyols. Comparative Example 4 is a system using water and HCFO-1233zd as the blowing agents, but does not contain any of polyols D to L. Note that Comparative Example 4 and Example 10 in Table 3 present the same data as Comparative Example 4 and Example 10 in Table 2.

Examples 10 and 13 to 15 show that the composition of the present invention can secure sufficient hardness while exhibiting excellent adhesiveness. On the other hand, as in Comparative Examples 5 and 6, when aliphatic polyester polyols obtained by a reaction between adipic acid and triethylene glycol have a low molecular weight, the effect of improving the adhesiveness could hardly be confirmed. Also, it can be understood that, as in Comparative Example 7, when an aliphatic polyester polyol obtained by a reaction between adipic acid and triethylene glycol has too high a molecular weight, the decrease in hardness is increased. Furthermore, it can be understood that, as in Comparative Examples 8 and 9, even when aliphatic polyester polyols obtained by a reaction between adipic acid and diethylene glycol have a molecular weight equivalent to that of the composition according to the present invention, the effect of improving the adhesiveness is low.

**Claims**

1. A composition for polyurethane foam raw material, comprising an aliphatic polyester polyol having a molecular weight of 450 to 800 g/mol, wherein the aliphatic polyester polyol is obtained by reaction of at least one acid selected from aliphatic dicarboxylic acids having 6 to 10 carbon atoms and at least one polyethylene glycol having 3 to 8 repeating units derived from ethylene glycol.

2. The composition according to claim 1, wherein the composition comprises a blowing agent.

3. The composition according to claim 2, wherein the composition comprises water as the blowing agent.

4. The composition according to any one of claims 1 to 3, wherein an amount of the aliphatic polyester polyol is 0.5 to 3.5 parts by mass based on 100 parts by mass of the composition for polyurethane foam raw material.

5. The composition according to claim 3, wherein an amount of the water is 0.2 to 10 parts by mass based on 100 parts by mass of the composition for polyurethane foam raw material.

6. The composition according to any one of claims 1 to 5, wherein the composition comprises an aromatic polyester polyol.

7. The composition according to claim 6, wherein an amount of the aromatic polyester polyol is 5 to 30 parts by mass based on 100 parts by mass of the composition for polyurethane foam raw material.

8. The composition according to any one of claims 1 to 7, wherein the composition has an isocyanate index of 90 to 150.

9. A polyurethane foam formed by foaming the composition according to any one of claims 1 to 8, wherein the polyurethane foam has a density of 5 to 80 kg/m$^3$.

Europäisches
Patentamt

European
Patent Office

Office européen
des brevets

# EUROPEAN SEARCH REPORT

**Application Number**

EP 20 17 8216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 543 063 A (COHEN HOWARD [US]) 24 September 1985 (1985-09-24) | 1 | INV. C08G18/40 |
| A | * example 6 * | 2-9 | C08G18/42 C08G18/48 |
| X | JP H05 117974 A (TAKEMOTO OIL & FAT CO LTD) 14 May 1993 (1993-05-14) | 1 | C08G18/76 |
| A | * paragraph [0026] * | 2-8 | |
| X | US 4 946 876 A (CARPENTER WILLIAM G [US] ET AL) 7 August 1990 (1990-08-07) | 1 | |
| A | * compounds PE-2 * | 2-9 | |
| X | US 4 128 532 A (EIMERS ERICH ET AL) 5 December 1978 (1978-12-05) | 1 | |
| A | * example 2 * | 2-9 | |
| A,D | JP 2006 045435 A (KAO CORP) 16 February 2006 (2006-02-16) * Manufacture Example 1 * | 1-9 | |

**TECHNICAL FIELDS SEARCHED (IPC)**

C08G

The present search report has been drawn up for all claims

| Place of search | Date of completion of the search | Examiner |
|---|---|---|
| Munich | 8 October 2020 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 17 8216

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2020

| Patent document cited in search report | | Publication date | Patent family member(s) | | Publication date |
|---|---|---|---|---|---|
| US 4543063 | A | 24-09-1985 | NONE | | |
| JP H05117974 | A | 14-05-1993 | JP | 2977171 B2 | 10-11-1999 |
| | | | JP | H05117974 A | 14-05-1993 |
| US 4946876 | A | 07-08-1990 | AU | 4481289 A | 28-05-1990 |
| | | | CA | 2001869 A1 | 30-04-1990 |
| | | | ES | 2017849 A6 | 01-03-1991 |
| | | | US | 4946876 A | 07-08-1990 |
| | | | WO | 9005155 A1 | 17-05-1990 |
| US 4128532 | A | 05-12-1978 | NONE | | |
| JP 2006045435 | A | 16-02-2006 | JP | 4468106 B2 | 26-05-2010 |
| | | | JP | 2006045435 A | 16-02-2006 |

EPO FORM P0459

For more details about this annex : see Official Journal of the European Patent Office, No. 12/82

**EP 3 919 538 A1**

## REFERENCES CITED IN THE DESCRIPTION

### Patent documents cited in the description

- JP 2006045435 A
- JP 2003206330 A
- JP 2010189455 A